# EUROPEAN PATENT APPLICATION

(11) **EP 3 851 872 A1**
(43) Date of publication of application: **21.07.2021**
(21) Application number: 21151937.6
(22) Date of filing: 15.01.2021
(51) Int. Cl.: G01S 7/48, G01S 17/89, G01S 17/931

(54) **OBJECT DETECTION ON A PATH OF TRAVEL AND OBSTACLE DETECTION ON RAILWAY TRACKS USING FREE SPACE INFORMATION**

(30) Priority: 16.01.2020 US 202016745169
(71) Applicant: Outsight, 75006 Paris (FR)
(72) Inventor: BRAVO ORELLANA, Raul, 75005 PARIS (FR)
(74) Representative: Plasseraud IP

(57) **Abstract**

A method and apparatus of performing object detection on a path of travel is described. The invention is also related to obstacle detection on railway tracks. Object detection over irregular surfaces or traveling over know paths is also provided. The invention can be applied to railways for obstacle detection on train tracks with a look-ahead sensor system such as a lidar and/or camera system. The object detection may involve the use of multispectral lidar and material identification as well as artificial intelligence for object identification. A reference map is created during a first pass through a virtual tunnel of travel. A vehicle travelling through the tunnel of travel the vehicle will register with reference map and use differences between scans and the reference map to perform object detection. Responses are performed based on the object detection or object identification.

## Description

### FIELD OF THE INVENTION

The present invention relates to object detection on a regular route of a vehicle. More particularly, the present invention relates to performing object detection while going through a path of travel. The present invention can be applied to railways for obstacle detection on train tracks with a look-ahead sensor system such as a lidar and/or camera system.

### BACKGROUND OF THE INVENTION

Automated object detection is an important component to modern vehicle safety and navigation. As a vehicle travels down a path, objects may be detected and appropriate responses taken. The responses may vary on the type of object detected including the size or material, of whether the object is fixed, mobile, hard or soft. Given the various responses that may be required, accurate object detection is highly desirable.

To take advantage of the high quality and low-cost digital imaging systems available today, some object detection is performed using 2D image processing. As might be expected, image processing based on 2D images from video feeds do not have distance information. Without distance information, objects are usually detected through visual recognition.

Visual recognition algorithms may use machine learning to detect and identify objects on irregular or uneven surfaces such as train tracks. The identification is performed by trained classifiers, which is the logic that is produced from the artificial intelligence (Al) training process. These trained classifiers are difficult to certify because the internal logic is a "black box" and therefore difficult to validate or characterize.

False positives are another problem with trained classifiers. It is difficult to avoid false positives because the variety of shapes encountered on uneven surfaces, like train tracks, is undefined and essentially unlimited. Additionally, the system performing the identification is usually part of a vehicle that is moving down the path of travel at a reasonably high speed so that the contents of the images are moving. Attempting to identify a large number of objects using images taken while moving leads to many false positives, which reduce the usefulness of Al identification systems for object detection on irregular surfaces.

Many vehicles travel regular and known paths over irregular terrain. A good example of this is a train, which typically travels over tracks placed on crushed stone embankments. Buses may also travel well known paths, notably busses with private lane(s). Generally, we consider any vehicle guided along a trajectory, including mainly ground vehicles but not excluding elevator cabin or cable car. Since accurate object identification is so important to automated vehicles, it would be beneficial to take advantage of the fact that certain vehicles travel over known paths when performing object identification in order to increase the overall accuracy.

### SUMMARY OF THE INVENTION

A system and method for performing object detection in a vehicle travelling over a known path is described. In accordance with one embodiment of the invention. the object detection is performed by generating a reference map during a first pass over the path. During a second pass the vehicle is registered at a location within the reference map and a 3D point cloud generated during the second pass is compared with the reference map. Any differences detected during the comparison are used to perform object detection.

The known path may be defined by a "tunnel of travel" in some embodiments. The tunnel of travel is defined as the space having a known height and width over the ground of the known path of travel. In one embodiment of the invention the reference map is created during a first pass through the tunnel of travel by scanning a path as least as wide and as high as the tunnel of travel and recording the detected surfaces into the reference map including the ground level surfaces. The stored surface data preferably includes the locations along the tunnel of travel as well as the time at which the data was last updated.

During exemplary operation, a vehicle travelling through the tunnel of travel will perform its own 3D scan. The scan will typically be focused, or directed, at a location in the tunnel of travel that is ahead of the vehicle's current location in the tunnel of travel. Since the tunnel of travel may not follow a straight line, and the vehicle knows the path of the tunnel of travel, in many cases the vehicle will scan at a location that is not the same as the current direction of travel of the vehicle. For example, if the tunnel of travel curves to the right ahead of the current location of the vehicle then the scan will be performed forward and to the right of the current direction of travel. Alternatively, if the tunnel of travel curves to the left ahead of the current location of the vehicle then the scan will be performed to the left of the current direction of travel. Clearly, the scan may also be directly in front of the vehicle if the tunnel of travel continues in the same direction as the current direction of travel. Curves can also include hard angle turns in some embodiments of the invention. How far ahead along the tunnel of travel the scan is performed may vary with the size and speed of the vehicle, as well as the terrain and environment including level of urbanization, incline and presence of obstructions.

Otherwise stated, according to an aspect, it is proposed a method for performing object detection in a vehicle travelling along a path having a predefined route, the method comprising the steps of:
S1- generating a reference map in a first pass along said path;
S2- registering the vehicle at a current location in said reference map during a second pass along said path;
S3- scanning, during said second pass, a volume of interest along said path, at a predetermined distance in front of the current location of said vehicle, resulting in a current 3D point cloud data;
S4- comparing 3D point cloud data with unoccupied space in the reference map; S5- performing object detection using occupied points from said 3D point cloud data that were not occupied in said reference map, thereby creating a detected object. Thanks to this arrangement, since the reference map is specific to the traveled route, this facilitates an easy comparison of a newly acquired 3D point cloud data with regard to the reference map. A general purpose map or cartographic data would be less relevant and/or less accurate for the pursued aim. We take advantage that the reference map here is built specifically in a previous passage over the same path. We note that at step S3, the scanning process is made via a lidar device, i.e. a Light Detection and Ranging device. Such device operates both at day and night outer conditions; it works well also on underground route without lighting.

At step S1, the determination and generation of the reference map can be performed by any means, with a lidar device mounted on any moving means, or on a similar vehicle as regular vehicles traveling usually the route.

Stated otherwise regarding steps S3 to S5, the method comprises :
- scanning said path a predetermined distance in front of a current location of said vehicle;
- comparing occupied space in said reference map with 3D point cloud data generated during said scanning step;
- performing object detection using occupied points from said 3D point cloud data that were not occupied in said reference map.

According to one aspect, the method can be such that said 3D point cloud data is generated using a multi-spectrum light detection and ranging and a reflected spectrum is used to perform material identification for said detected object, and further wherein said material identification is used to assess a nature of the detected object and/or to perform object identification of said detected object. Using two or more frequencies/wavelengths can bring valuable information about the target object, e.g. the spectral response differs according to the surface material of the object. A wood piece, a leaf, a rock, a plastic part, a metal part, a fabric part, human skin, have each a specific spectral response. Analyzing the response according to two or more wavelengths reflected from targets give a good image of the spectral response, and thus a valuable indication about the nature of the target. Up to ten or a dozen of wavelengths can be used.

According to one optional aspect, the method may further comprise the steps S6- assessing a nature of the detected object, and
S7- making a decision, according to the nature of the detected object, to maintain or reduce a current velocity of a vehicle. Accordingly any relevant decision for vehicle safety can be taken, e.g. an emergency braking can be triggered if a substantially dangerous object is lying on the path ahead of the vehicle (for example a rock, another vehicle, ..). Conversely, the vehicle speed can be maintained if the detected object is found not problematic (for example leaves, plastic bag,...).

According to one optional aspect, the method may further comprise the steps
S8- using a current 3D point cloud data collected during the second pass or a subsequent pass to update the reference map. Advantageously, the reference map is thus updated on a periodic basis. The need for specific first pass for updating from time to time the reference map is therefore reduced.

According to one optional aspect, the same lidar device or similar lidar device or similarly positioned lidar device is used for generating the reference map during the first pass and to scan 3D point cloud data during the second pass or a subsequent pass. Therefore comparison is further eased, since resolution and data content is similar for both reference map and newly acquired map.

For the generation of the reference map (S1), it is contemplated to use one of the regular vehicles traveling usually the route. Thereby, no specific vehicle or moving means is necessary.

According to one aspect, the predefined route can be a regularly practiced route, i.e. a route traveled along periodically by a same vehicle (e.g. shuttle) or similar distinct vehicles. This situation therefore distinguishes very much from a situation like a car riding in a conventional road, where most often the car never pass twice along the same path.

According to one aspect, the vehicle is a **1-D** vehicle, 1-D standing for substantially single degree-of-freedom, i.e. a vehicle guided along a trajectory, being guided by mechanical means (rails) or electronics means (wire-guided, discrete beacons,....). The vehicle control is simplified, only acceleration and braking along the trajectory is needed. On a conventional road vehicle (car, bus, truck), there is necessarily a second degree-of-freedom (i.e. steering), rendering more complex the environment sensing and the vehicle control.

According to one aspect, the vehicle is a ground vehicle. Though, elevators or cable cars can also use the present invention. The invention can be notably applied to public transportation systems like trains, subways, tramways, airport shuttles, etc....

According to one aspect, the generating step (S1) comprises:
S1a - moving along said path;
S1b - scanning said path using a 3D sensor to generate 3D points;
S1c - storing said 3D points in said reference map. It is a reliable way to collect the occupied and unoccupied voxels. The reference map represents a normal situation of the route, free of any undesired obstacle.

According to one aspect, the volume of interest is encompassed in a **tunnel of travel.** Said tunnel of travel includes the space portion swept by the vehicle when it travels along the predefined route, i.e. the travel envelope. Things happening outside the tunnel of travel can be practically ignored. Therefore, the scanning process can take only a subset of the field of view of the scanning device (lidar), thereby reducing the volume of data to be processed for 3D points comparison. Fewer resources are used and process can be faster.

According to one aspect, the tunnel of travel extends along a reference longitudinal line (X) with a substantially constant cross-section. The geometric definition of the tunnel of travel can be rather simple. It is a cylinder when reference longitudinal line is straight (horizontal cylinder for ground vehicle). When the reference longitudinal line is not straight, a base perimeter combined with an interpolated line representing the reference longitudinal line is also a simple digital geometric definition easy to be handled by computer units.

According to one optional aspect, the reference map comprises first free space locations associated with areas of said tunnel of travel along the predefined route, and during second pass or a subsequent pass said lidar device performs surface detection to determine second free space locations in the volume of interest. At the comparison step, the computer unit compares second free space locations with respect to first free space locations. This turns out to be a rather simple manner to detect 'unexpected' object.

According to one optional aspect, the volume of interest (scan locations) is selectively chosen whenever said path or tunnel of travel exhibits a curve ahead of the current location of the vehicle:
- when the tunnel of travel is known to curve to the right based from the predefined route, the volume of interest (scan locations) is inclined to the right with reference to a current heading,
- when the tunnel of travel is known to curve to the left based from the predefined route, the volume of interest (scan locations) is inclined to the left with reference to a current heading. Therefore, the volume of interest better fits the tunnel of travel and we avoid scanning area with no interest.

According to one optional aspect, the volume of interest (scan locations) is selectively dependent on a current vehicle speed. The forward depth of the volume of interest can be proportional to the speed or proportional to the square of the speed. This is to ensure that an emergency braking could be effective if a dangerous object is found to lie over the path.

According to one optional aspect, multiple scans of a particular location are performed and said object detection also uses changes in surfaces detected during said multiple scans. Moving objects can be identified, like a flag flapping in the wind, tree leaves, a flying bird, a moving animal.

The present invention is also directed to a **detection system** comprising:
- a lidar device (110) for scanning a physical environment and for generating 3D point cloud data corresponding to physical surfaces in said physical environment;
- a control unit (102) for performing at least comparison between 3D point cloud data and reference map,
- a memory (100) for storing a reference map and possibly 3D point cloud data, the system being configured to carry the method as exposed above.

The present invention is also directed to a **vehicle** comprising a detection system as exposed above. Part or all functions of the can be housed in the vehicle. Either the vehicle requires a data connection to access a dataset at a remote server or the vehicle does not require generally a data connection, except from downloading from time to time.

The present invention is also directed to **railroad vehicle** comprising a detection system as exposed above, with the lidar device installed at one longitudinal end of the vehicle and a further lidar device installed at the other, opposite longitudinal end of the vehicle. Such vehicle can circulate in either directions along a same track or among a same couple of tracks.

### BRIEF DESCRIPTION OF THE DRAWINGS

Fig. 1 is a block diagram of an object detection and imaging system.
Fig. 2A a side view of a train travelling over train tracks.
Fig. 2B a side view of a train travelling over train tracks with objects in the tunnel of travel.
Fig. 3 an overhead view of a train travelling over train tracks.
Figs. 4 is a flow chart illustrating the steps performed in accordance with some embodiments of the invention.
Figure 5 is a side view of an exemplary railroad vehicle comprising two lidar devices installed at its respective longitudinal ends of the vehicle.
Figure 6 illustrates exemplary profiles of the tunnels of travel above railways tracks.

### DETAILED DESCRIPTION OF THE INVENTION

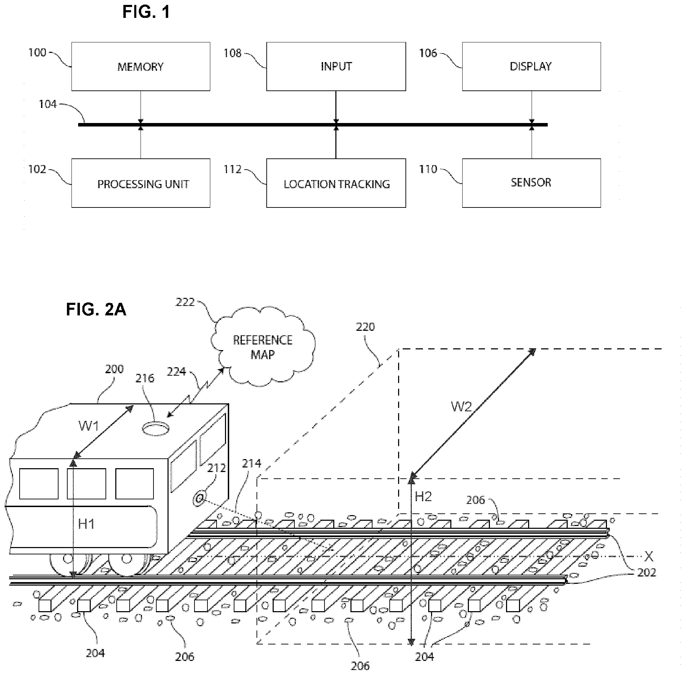

Fig. 1 is a block diagram of an object detection configured in accordance with one embodiment of the invention. The system includes memory 100, processing unit 102, interconnect 104, display 106, input 108 and sensor 110. Memory 100 contains data and instructions that are used by processing unit 102. These data and instruction cause processing unit 102 to receive image data from sensor 110 and display information on display 106. Additionally, processing unit 102 may receive user input from input 108.

In general, the various steps and operations described herein are performed by processing unit 102 which receives instructions stored in memory 100. Processing unit 102 controls the various other blocks in response to the instructions from memory unit 100 as well as in response to data received from other blocks shown Fig. 1.

Memory 100 is typically a combination of semiconductor-based static and dynamic RAM working in conjunction flash-RAM and hard disk drive storage systems, or some subset thereof. Processing unit 102 is preferably a semiconductor-based microprocessor unit. Input 108 may be a keyboard, selection knob, joystick, or touch screen. Display 106 is typically a flat screen display such as an LCD or OLED display. In some embodiments of the invention input 108 and display 106 may be integrated into a single touch-screen display. Interconnect 104 may be a parallel computer bus, USB, SATA, PATA, ethernet or some combination thereof.

Sensor 110 may be various types of scanning devices, including radio frequency, infrared, optical or ultra-violet sensing semiconductor device or component. Sensor 110 may also be a sound sensing device such as a microphone. In various embodiments of the invention the sensors may be time-of-flight 3D scanners or more generally depth-resolved imaging systems such as Lidar. In still other embodiments of the invention, sensor 110 may be a stereoscopic camera system, such as a stereoscopic 3D camera system comprising a 2D camera sensors providing 2D images that can be used to perform geometric transformations to derive 3D information from a set of 2D images. Sensor 110 may generate light, radio frequency signal or sound to enable the detection of the reflection of these signals from object surfaces, or it may use signals naturally present in the environment such as light from outside sources. The described embodiments herein typically use lidar for sensor 110, but sensor 110 should not be limited to lidar.

Alternative embodiments of the invention may place one or more of the components (or portions therefore) shown in Fig. 1 in remote locations. In this configuration the remotely located components would be accessed via network connections. For example, portions of memory 110 may be cloud based storage with topographical information such as 3D point cloud generated during a previous pass or passes, or free space information derived from 3D point cloud data generated during a previous pass or passes or a path of travel determined during a previous pass or passes. The topographical information may also include the location of buildings and other structures that are accessed via the Internet.

Fig. 2A shows a train and train tracks configured in accordance with one embodiment of the invention. In this embodiment train 200 is travelling over train tracks 202, which are connected via railroad ties 204 which sit atop crushed rock 206. Train tracks 202, crushed rock 206 and railroad ties 204 combine to form a highly irregular surface that makes object detection very difficult. In one embodiment of the invention, the object detection system shown in Fig 1. is traveling within train 200.

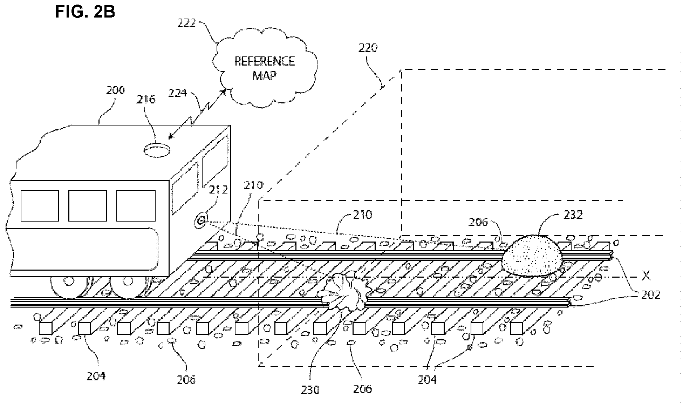

Still referring to Fig. 2, in accordance with one embodiment of the invention a "travel tunnel" 220 is established along a known path of travel over train tracks 202. The travel tunnel 220 is a virtual tunnel established based on a height and width above train tracks 202 and which goes down to the surface comprised of train tracks 202, railroad ties 204 and crushed rock 206, as well as any other surfaces that might be along the path of travel of train 200. Travel tunnel 220 will follow train track 202 as it passes over the terrain including and turns and curves that might exist on the particular route being travelled.

About the route which is predefined or predetermined, it is to be noted that the predefined route is typically a regularly practiced route, i.e. a route traveled along periodically by either a single vehicle (e.g. a shuttle), or a plurality of identical vehicles. The case of similar distinct vehicles traveling the predefined route is also considered, or even a plurality of vehicles from two or more different types.

Train 200 also communicates via a wireless interface 216 and wireless link 224 with reference map 222. Reference map 222 may be located in a "cloud" based database. Those skilled in the art will recognize that reference map may also be located in train 200 and that alternative methods for interfacing with reference map 222 may also be used. For example, a wire-based interface may also be used if train 200 is an electrical train that is powered by an overhead electrical line over which communication signals may also be transmitted.

In one embodiment of the invention reference map 222 contains data for all the surface points previously detected within virtual tunnel 220. These surface points may include all the surface points for the irregular surface formed by tracks 202, ties 204 and rocks 206, as well as any surfaces above or to the left or right of the tunnel of travel. This would include buildings, trees or any other objects or structures.

In some embodiments of the invention reference map 222 will also contain free space information. This free space information includes a database or list of previously unoccupied 3D points, or voxels, that may be determined by calculating line-of-sight vectors to surface points. A system and method for performing 3D imaging use free space information is described in co-filed and co-pending US Patent Application Serial No. 16/745,221 entitled "Single Frame Motion Detection and Three-Dimensional Imaging Using Free Space Information" assigned to the assignee of the present invention and incorporated herein by reference in its entirety. Key features are however copied below.

During exemplary operation of the 3D imaging system, i.e. the lidar device, the sensor generates 3D point cloud data in response to scans performed on the surrounding area. The point cloud data includes a set of 3D surface points (also referred to as just 3D points.) The point cloud data may also be in the form of points of geometric samples on the surface of the subject objects. Alternatively, the 3D points may take the form of a distance measurements to directly acquire 3D information. The point cloud data is used to update an object database. The object database is stored in memory 100. The object database contains objects that represent the physical environment surrounding the 3D imaging system.

The point cloud data is delivered to the other systems for further processing. This processing includes the determination of free space locations based on the 3D points. The free space locations are preferably determined by calculating a line of sight between a 3D point and the location of sensor or the location of a receptor associated with sensor. Points along that line of sight are then designated as free space locations. The free space locations are preferably stored in a free space location database. Alternatively, the free space location and the 3D points may be stored in the same database as the 3D points.

In practice each scan of volume of interest is performed from a pose (i.e. point of view) with a 2-degrees of freedom sweeping process in a polar coordinate system (horizontal/azimuth and vertical/elevation) corresponding to rotating mirrors which orientate the lidar beam. The points locations in the polar coordinate system are geometrically transformed into a cartesian reference as known per se.

In an exemplary embodiment of the invention, train 200 begins its scheduled route over train tracks 202 by registering with reference map 220. The registration process generally consists of logging the current location of train 200 and downloading the next section of travel tunnel 220 along which the train will travel on its scheduled route.

As train 200 travels down track 202 along a scheduled route lidar 212 transmits laser pulse 214 to the areas within and around tunnel of travel 220. Laser pulse 214 scans over the area in front of train 200 and the laser reflections are used to determine the surrounding surface areas including the shape of train tracks 202, railroad ties 204 and crushed rock 206. For one current vehicle location and current speed, it is defined a volume of interest which includes the scan locations (azimuth + elevation). Then train 200 compares the detected surfaces to the surface points for the associated section of travel tunnel 202 with reference database 220.

In accordance with one embodiment of the invention the result of the comparison may yield a set of surface points that do not match the corresponding set of surface points from reference map 222. If new surface points are detected, then object detection is performed using these new surface points. These new surface points may also be thought of as the difference set. This object detection may take into account the shape, size and connectivity (or lack thereof) of these new surface points. Based on the nature of the object detected, various responses can be implemented including issuing warnings, sounding alarms or attempting to stop or slow the train.

In the newly acquired 3D point cloud, if nothing significant differs from the reference map 222, no particular action is to be taken at the train control level. By contrast, it is desired to trigger an emergency braking procedure to stop the train in case a significant solid object if found to lie over the path ahead of the vehicle.

Fig. 2B is an illustration of a train travelling over train tracks in accordance with one embodiment of the invention. In this embodiment, the laser pulses 210 from lidar 212 are reflected from bag 230 and stone 232, which are located over tracks 202 within tunnel of travel 220. The object detection system will compare the surface reflections with the reference map 222 for this same location and determine that new 3D surface points have been detected. Object detection will be performed on the new surface points.

In the case of bag 230, the object detection system will note the irregular shape as well as the overall size. The shape and size of the object will be compared against a database and object identification performed. In some embodiments of the invention, object identification may be performed after or even concurrently with object detection. The object identification may incorporate artificial intelligence (Al) techniques. Additionally, in some embodiments of the invention the object detection system will note the level of reflectivity of the surface points. Additionally, when using a multi-spectrum lidar, the multi-spectrum reflection will be used to identify the material, which in this case may be plastic or paper. In still other embodiments of the invention multiple scans will be performed at the same location and any change in the shape of the object will be used to determine whether the object is flexible or rigid. For example, in the example case of Fig 2B, bag 230 may change shape between scans as in flaps in the wind. Once it is determined that bag 230 is a lightweight and flimsy object the appropriate response can be taken. For example, no action could be taken, or the location of the bag could be recorded so that it could be removed or investigated at a later time.

In the case of stone 232, the object detection system will note the size, shape and smooth surface. The shape and size of the object will be compared against a database and object identification performed. In some embodiments of the invention, object identification may be performed after or even concurrently with object detection. The object identification may incorporate artificial intelligence (Al) techniques. Additionally, in some embodiments of the invention the object detection system will note the level of reflectivity of the surface points. Additionally, when using a multi-spectrum lidar, the multi-spectrum reflection will be used to identify the material, which in this case would be natural rock. And in other embodiments of the invention, multiple scans will be performed at the same location and any difference in the shape of the object will be used to determine whether stone 232 is rigid or flexible. In this case the object detection system should detect stone 232 is a solid and heavy object and then an appropriate response will be taken. For example, an automatic emergency response triggered, such as issuing a warning alarm or message, reducing the velocity or starting an emergency braking procedure to stop the train. If there is any obstacle blocking equipment or impact preparation materials available to the train, such items would be deployed.

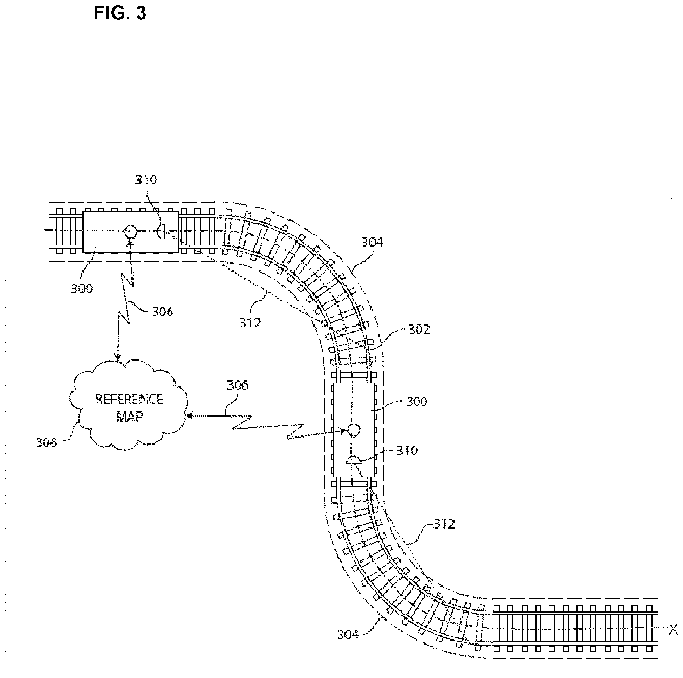

Fig. 3 is a top view diagram of a train and train tracks configured in accordance with one embodiment of the invention. In this configuration train 300 is travelling down track 302, which follows a known path associated with the regular route of train 300. The two instances of train 300 represent two different points in time as train 300 travels over track 302. Train 300 communicates via wireless link 306 with reference map 308, which is typically the same type of reference map as reference map 222 of Fig. 2. Still referring to Fig. 3, tunnel of travel 304 is a virtual zone following the path of track 302 and starting from the surface of the known path and having a predetermined height and width. Reference map contains the surface points associated with tunnel of travel 304 during a previous pass through that tunnel of travel.

During typical operation train 300 will use lidar 310 to transmit and receive laser pulses 312 into the area defined by tunnel of travel 304. For train 300 in the upper left portion of Fig. 3, this laser pulse is directed to the right of the current direction of travel of train 300 in anticipation of the upcoming curve in tracks 302. For train 300 located at the center of Fig. 3, lidar 300 continues to transmit laser pulse 312 to a location within tunnel of travel 304. In this instance, the curve of tunnel of travel 304 is such that laser pulse 312 is directed to the left of the current direction of travel in anticipation of the known path of tunnel of travel 304 and tracks 302. In general, the object detection system will use the known path of the tunnel of travel to focus the scanning function at some point ahead of the current direction of travel, but still within the tunnel of travel 304.

For both instances of train 300 shown in Fig. 3, the surface points detected with lidar 310 will be compared to the surface points of reference map 308 at the corresponding location within tunnel of travel 304. If differences are detected, then object detection will be performed as described herein. Additionally, in one embodiment of the invention reference map 308 will contain free space information. In this embodiment of the invention, if surface points are detected in locations that were designated as free space locations in reference map 308 then object detection is also performed.

The location, or locations, at which train 300 scans using lidar 310 may also depend on the speed of travel of train 300. For example, as the speed increases the scan may be performed further along the path of travel defined by tunnel of travel 304. Similarly, as the speed of train 300 decreases the scan may be performed closer along the path of travel defined by tunnel of travel 304 in order to maintain the most current scan possible given the speed train 300.

In some embodiments of the invention train 300 may store the scan data generated while passing through tunnel of travel 304 and then use that data to update reference map 308 at some point later in time. This could happen during the time train 300 is travelling, or it could be performed at a later time with possible comparison and combination with data from other passes through the tunnel of travel. The comparison and combination could include averaging or other transformation or combining of data sets. Additionally, if this is the first pass through tunnel of travel 304 using the scanning equipment, then the scan data may be used to create reference map 304.

In other embodiments of the invention train 300 will use multi-special lidar to perform surface scans. A system and method for performing material identification in accordance with some embodiments of the invention is described in international patent application WO2019180020 entitled "METHOD AND SYSTEMS FOR IDENTIFYING MATERIAL COMPOSITION OF OBJECTS" incorporated herein by reference in its entirety. Another system for using multi-spectral lidar is described in co-pending US Patent application serial no. 16/675,016 filed on November 5, 2019 and entitled "Adaptive Active Safety System Using Multi-spectral LIDAR" assigned to the assignee of the present invention and incorporated herein by reference in its entirety. Another description of a multi-spectrum lidar system that may be incorporated into some embodiments of the invention is described in co-pending US patent application serial no. 16/735,452 filed on January 6, 2020 and entitled "Multi-spectral LIDAR Object Tracking" assigned to the assignee of the present invention and incorporated herein by reference in its entirety.

In this embodiment laser pulse 312 is formed from two or more laser pulses of different frequency. The resulting change in relative intensity of the reflected pulses is used to assist in the identification of the material from which they reflected. This material identification can be combined with the shape and size of the new surface points detected to enhance the accuracy of the object detection as well as possible object identification. Once object detection or object identification have been performed then a more accurate response can also be taken.

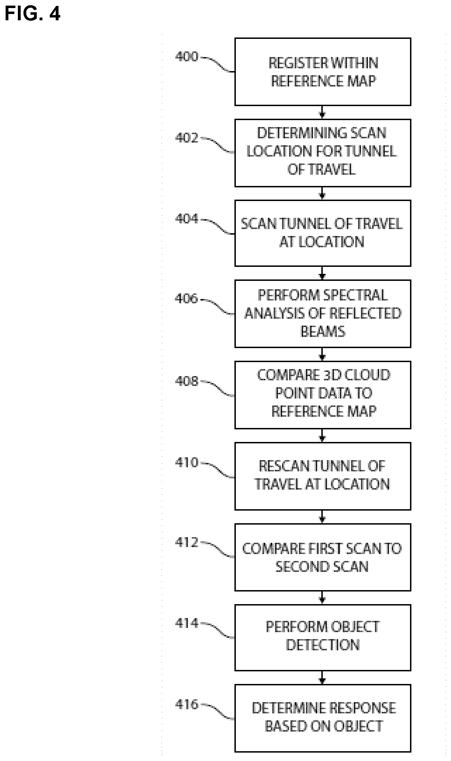

Fig. 4 is a flow chart illustrating the steps performed in accordance with one embodiment of the invention. At step 400 the train registers with the reference map containing the surface points for the tunnel of travel. This registration typically entails establishing the current location of the train within the tunnel of travel and downloading or preparing the segment of reference map for the portion of the tunnel of travel in front of the train. The segment of the reference map will normally include all the surrounding surface areas along the tunnel of travel detected and gathered during previous passages and scans.

At step 402 the scan location within the tunnel of travel is determined. This determination will typically take into account the velocity of the train, the curvature of the tunnel of travel (which can correspond to the curvature of the associated train tracks) as well as any objects obstructing the line-of-sight access to that location such as a hill or structure. In some embodiments of the invention the closest available line-of-sight location within the tunnel of travel will be used as the scan location if there is an obstacle between the train and the preferred location. For example, on a curved section of the track the scan may have to be performed on a closer segment of the tunnel of travel than would otherwise be used.

At step 404 a scan of the tunnel of travel is performed at the determined location. At step 406 a spectral analysis is performed on the reflected laser pulses received by the lidar. This is particularly useful for embodiments of the invention where multi-spectrum lidar is used. This multi-spectrum analysis may be used to identify the material from which the reflections originate.

At step 408 the 3D point cloud data from the scan is compared with the surface data from the reference map at the corresponding location (or position). If the comparison results in a set of surface points that were previously not in the reference map an object set is created using these new points. Connected 3D points may be grouped into objects and the size and shape of these objects determined. The size and shape information can be combined with the identification of any materials as described in the previous step.

Additionally, surface points that were part of the reference map, but which were not detected by the scan, may be grouped together into gaps, voids or holes. These voids may also be used as part of any response performed later in this process.

In one embodiment of the invention, the reference map includes free space locations and the 3D point cloud from the scan is compared with the free space location in the reference map. The object set may then be created from points where free space locations have changed to occupied locations.

In some embodiments of the invention a rescan of the tunnel of travel at the same location may be performed at step 410. This rescan will provide additional data that will increase the reliability of the surface information and may also aid in object detection. At step 412 the changes between the first and second scan within tunnel is determined. If changes are detected, this is also used in performing object detection. In particular, where significant changes are detected this may indicate a lack of rigidity of those objects and this can be taken into account when performing object detection or identification. For example, an object might be identified as a paper or plastic bag for which no response is required.

At step 414 object detection and identification is performed. Object detection is preferably performed using some or all of the information gathered or generated in the previous steps. At step 416 the response to the object detection will be determined based on the nature of the particular object detected. Possible responses include sounding alarms, changing the velocity of the train, activating lights, notifying the conductor or sending messages for response by other systems.

In some embodiments of the invention, the data from the scans performed during each pass by train may be used to update the reference map. This will assist in maintaining an accurate reference map and will allow small changes in the irregular surface to be taken into account such as rocks moving or erosion.

In one embodiment of the invention, the reference map is initially generated during a first pass of the lidar through the tunnel of travel. The surfaces detected by the scans performed during this first pass can be stored and then assembled into a reference map that can be used during later passes. The reference map can be supplemented with the scans performed during later passes as well including passes in which the existing reference map is used to perform object identification. The reference map may also be supplemented with free space information.

It should be understood that while the invention is described in the context of a train travelling over train tracks the invention may be incorporated into many other environments including, for example buses or elevators, where regular travel over a known path is performed. And, as mentioned elsewhere in this application, object detection can also include detection of voids or gaps, which present their own dangers in a moving system such as a train. Also, while the invention is described in the context of using a lidar based surface detection system, the use of other imaging systems is also consistent with some embodiments of the invention.

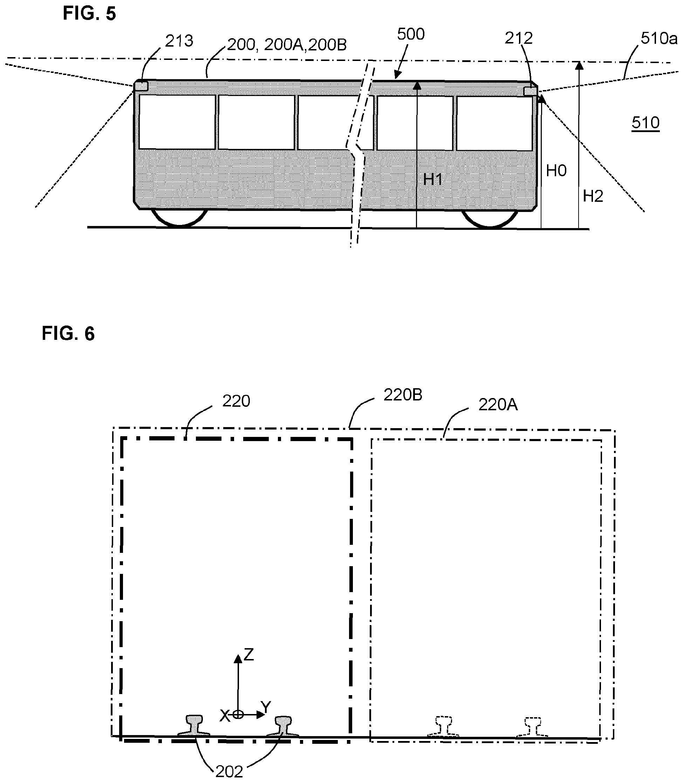

Figure 5 shows a side view of an exemplary railroad vehicle **500** comprising two lidar devices. A first lidar device **212** is installed at a first end and look ahead when the vehicle is traveling toward the right. A second lidar device **213** is installed at a second end and look ahead when the vehicle is traveling in opposite direction, i.e. toward the left. First and second lidar devices are installed at a height **H0** rather high, i.e. below the overall height **H1** of the vehicle. This somewhat 'high' position allows to maximize the distance of visibility at ground level. With a point of view at 2m high, we have enough resolution at ground level at 100m ahead at least (for substantially straight path portion). The lidar device has field-of-view denoted 510 generally oriented downwards with upper limit 510a pointing slightly upwards.

In other embodiments, the lidar device or devices can be located elsewhere, at a lower section.

In the shown example, the railroad vehicle is electrically supplied from the ground, in practice from a supply rail named third rail. In this case the height **H2** of the tunnel is slightly above the overall height **H1** of the vehicle. In other cases where the railroad vehicle is electrically supplied from the overhead area, the pantograph in its deployed configuration is to be taken into account and the height **H2** of the tunnel is well above the overall height **H1** of the vehicle.

There may be several similar vehicles **200, 200A, 200B,** each equipped with the same detection system components.

Figure 6 illustrates exemplary profiles of the tunnels of travel above railways tracks. Guiding rails are denoted 202. A single track tunnel of travel 220 is illustrated at left side. Another single track tunnel of travel 220A for the track generally traveled in the opposite direction is illustrated at right side. In certain configurations with a couple of train tracks side-by-side there can be defined a combined tunnel of travel can encompass the double track tunnel of travel 220B. In such case, trains traveling in opposite directions can notify one another about an obstacle present on the tracks.

In some exemplary embodiments, the vehicle is a **1-D** vehicle, namely a single degree-of-freedom, guided precisely along a trajectory. In such cases the vehicle is being guided by mechanical means (rails). Regarding the vehicle body, the transverse deviations in position along horizontal transverse axis Y is very small, let's say below 5 cm. The deviations in position along the vertical axis Z depends on vehicle suspension if provided. It can range from 5 cm to 20 cm proportionate to suspension compliance.

In other exemplary embodiments, the vehicle is generally a **1-D** vehicle namely a degree-of-freedom with small transverse compliance. In such cases the vehicle is being guided by electronics means, such as wire-guided, discrete beacons, or the like.

In both previous cases, one will understand that the vehicle cannot go around an inadvertent obstacle on the path. The only relevant decision is to decrease the vehicle speed. In case a collision is likely, the system can decide to actuate the vehicle brake or even to trigger an emergency braking to stop the vehicle as early as possible.

As apparent from Figure 2A and 6, the vehicle of interest exhibits a height H1 and a width W1. The tunnel of travel exhibits a height H2 and a width W2. In practice H2 > H1 and W2 > W1. In other cases, the transverse cross section is not rectangular but exhibits any shape. The shape of the tunnel of travel encompasses the overall shape and/or swept shape o. Likewise, the tunnel of travel surrounds the envelope of positions occupied by the vehicle when it travels the route. The tunnel of travel forms a safety envelope for the vehicle displacement.

In some embodiments, where the guiding is precise, we can have W2 comprised between 1,05 x W1 and 1,2 x W1. Similarly, we can have H2 comprised between 1,05 x H1 and 1,2 x H1.

In some embodiments, as shown at figures 2A, 3 and 6, the tunnel of travel extends along a reference longitudinal line **X** with a substantially constant cross-section. In case of railways rail, said reference longitudinal line **X** can be taken as the center line of the top surface of the rails 202, as illustrated at Fig 6. In the case of subways, the tunnel of travel can be a real tunnel. We note here that the underground tunnels are not illuminated and remain in dark. The promoted system provide help/aid to subways drivers since the system detect any intrusion on the tracks, and the drivers are relieved from this critical task.

## Claims

1. A **method** for performing **object detection** in a **vehicle** (200) travelling along a **path** having a predefined **route,** the method comprising the steps of:
S1- generating a **reference map** (222) in a **first pass** along said path;
S2- **registering** the vehicle at a current **location** in said reference map during a **second pass** along said path;
S3- **scanning,** during said second pass, a **volume of interest** (210;510) along said path, at a **predetermined distance** in front of the current location of said vehicle, resulting in a **current 3D point cloud data;**
S4- **comparing** 3D point cloud data with **unoccupied space** in the reference map;
S5- **performing object detection** using occupied points from said 3D point cloud data that were not occupied in said reference map, thereby creating **a detected object** (230,232).

2. The method according to claim 1 wherein said 3D point cloud data is generated using a multi-spectrum light detection and ranging and a reflected spectrum is used to perform material identification for said detected object, and further wherein said material identification is used to assess a nature of the detected object and/or to perform object identification of said detected object.

3. The method according to any of claims 1 to 2, further comprising :
S6- assessing a nature of the detected object, and
S7- making a decision, according to the nature of the detected object, to maintain or reduce a current velocity of a vehicle.

4. The method according to any of claims 1 to 3, further comprising :
S8- using a current 3D point cloud data collected during the second pass or a subsequent pass to update the reference map.

5. The method according to any of claims 1 to 4, wherein same or similar or similarly positioned lidar device (212,213) is used for generating the reference map during the first pass and to scan 3D point cloud data during the second pass or a subsequent pass.

6. The method according to any of claims 1 to 5, wherein the predefined route is a regularly practiced route, a route traveled along periodically by a same vehicle (shuttle) or similar distinct vehicles.

7. The method according to any of claims 1 to 6, wherein said generating step (S1) comprises:
S1a - moving along said path;
S1b - scanning said path using a 3D sensor to generate 3D points;
S1c - storing said 3D points in said reference map.

8. The method according to any of claims 1 to 7, wherein the volume of interest is encompassed in a tunnel of travel (220).

9. The method according to any of claims 1 to 8, wherein the tunnel of travel extends along a reference longitudinal line (X) with a substantially constant cross-section.

10. The method according to any of claims 1 to 9, wherein the reference map comprises first free space locations associated with areas of said tunnel of travel along the predefined route, and wherein during second pass or a subsequent pass said lidar device performs surface detection to determine second free space locations in the volume of interest.

11. The method according to any of claims 1 to 10, wherein the volume of interest (scan locations) is selectively chosen whenever said path/tunnel of travel exhibits a curve ahead of the current location of the vehicle:
- when the tunnel of travel is known to curve to the right based from the predefined route, the volume of interest (scan locations) is inclined to the right with reference to a current heading,
- when the tunnel of travel is known to curve to the left based from the predefined route, the volume of interest (scan locations) is inclined to the left with reference to a current heading.

12. The method according to any of claims 1 to 11, wherein multiple scans of a particular location are performed and said object detection also uses changes in surfaces detected during said multiple scans.

13. A **detection system** comprising:
- a lidar device (110) for scanning a physical environment and for generating 3D point cloud data corresponding to physical surfaces in said physical environment;
- a control unit (102) for performing at least comparison between 3D point cloud data and reference map,
- a memory (100) for storing a reference map and possibly 3D point cloud data, the system being configured to carry out a method according to any of the claim 1 to 12.

14. A **vehicle** comprising a detection system according to claim 13.

15. A **railroad vehicle** (500) comprising a detection system according to claim 13, with the lidar device installed at one longitudinal end of the vehicle and a further lidar device installed at the other, opposite, longitudinal end of the vehicle.
